# EUROPÄISCHE PATENTSCHRIFT

(11) **EP 3 919 789 B1**
(45) Veröffentlichungstag und Bekanntmachung des Hinweises auf die Patenterteilung: **08.03.2023**
(21) Anmeldenummer: 20178439.4
(22) Anmeldetag: 05.06.2020
(51) Int. Cl.: F16K 11/00, E03C 1/10

(54) **SANITÄRARMATUR**
SANITARY FITTING
ARMATURE SANITAIRE

(43) Veröffentlichungstag der Anmeldung: 08.12.2021
(73) Patentinhaber: Flühs Drehtechnik GmbH, 58515 Lüdenscheid (DE)
(72) Erfinder: Lange, Lutz, 58511 Lüdenscheid (DE)
(74) Vertreter: Patentanwälte Dörner & Kötter PartG mbB

(56) Entgegenhaltungen:
- WO-A1-2014/138786
- WO-A2-2006/122078
- DE-A1-102005 004 275
- DE-A1-102007 011 860
- DE-U1- 29 805 835

## Beschreibung

Die Erfindung betrifft eine Sanitärarmatur, insbesondere eine Thermostatmischarmatur nach dem Oberbegriff des Patentanspruchs 1.

Mit Hilfe von Absperr- oder Mischventilen wird der Austritt von Medien aus Armaturen gesteuert. Hierzu ist das Ventil in eine Ventilaufnahme bzw. einen Ventilsitz der Armatur eingeschraubt, in dem wenigstens ein Wasserzulaufkanal und ein Wasserablaufkanal münden. Derartige Ventile für Sanitärarmaturen sind in den unterschiedlichsten Ausgestaltungen bekannt. Häufig kommen hier Thermostat-Mischventile zum Einsatz, die ein einstellbares Thermoelement aufweisen, über das der Zustrom von Warmwasser eines ersten Zulaufkanals sowie von Kaltwasser eines zweiten Zulaufkanals steuerbar ist. Durch das entsprechende Mischverhältnis von Warm- und Kaltwasser wird die gewünschte Wassertemperatur erzielt.

Um einen Rückfluss von in der Armatur befindlichem Wasser in die Zulaufleitungen bei einem Druckabfall zu vermeiden, ist es bei Trinkwasserinstallationen zwingend erforderlich, sogenannte Rückflussverhinderer vorzusehen. Hierbei handelt es sich um Ventilkörper mit einem über eine Feder gegen die Wasserzulaufrichtung vorgespannten Kolben. Dieser Kolben wird durch den Wasserdruck geöffnet, sodass das Wasser über die entsprechende Zulaufleitung in das Ventil einfließen kann. Sinkt der Wasserdruck unter einen Mindestdruck, der erforderlich ist, den Kolben entgegen der Federvorspannung zu bewegen, wird der Kolben mit einem an diesem angeformten Dichtkegel über die Feder gegen einen Dichtsitz bewegt, wodurch ein Rückströmen des in der Armatur befindlichen Wassers in den Zulaufkanal verhindert ist.

Zur Positionierung eines Rückflussverhinderers ist in der Armatur der Ventilaufnahme vorgeschaltet jedem Zulaufkanal eine Kammer zu dessen Aufnahme zugeordnet. Um einen ortsfesten Sitz des Rückflussverhinderers zu gewährleisten, ist dieser mit Rastnasen versehen, die bei Einbringen des Rückflussverhinderers in eine in der Wand der Kammer angeordnete Rastnut einrasten, wodurch der Rückflussverhinderer in der Wandung der Kammer verankert ist. Eine gattungsgemäße Sanitärarmatur ist beispielsweise in der WO 2006/122078 A2 beschrieben.

Nachteilig an dieser vorbekannten Anordnung ist, dass sich die Entnahme eines eingesetzten Rückflussverhinderers aus der Kammer zu dessen Austausch aufwendig gestaltet, da die Rastnasen nur schwer oder gar nicht aus der Rastnut herausbewegbar sind. Daher werden die Rastnasen im Zuge der Entnahme des Rückflussverhinderers oftmals zerstört, wonach abgebrochene Rastnasenteile in der Kammer verbleiben oder in den Zulaufkanal gelangen. Diese Rastnasenteile können zu Beschädigungen von Dichtungen oder auch zur Behinderung des Einsatzes eines neuen Rückflussverhinderers führen.

Hier will die Erfindung Abhilfe schaffen. Der Erfindung liegt die Aufgabe zugrunde, eine Sanitärarmatur der vorstehenden Art bereitzustellen, bei dem eine einfache, zerstörungsfreie Entnahme eines Rückflussverhinderers ermöglicht ist und die eine einfache Absperrung eines Zulaufkanals beispielsweise zum Austausch des Ventils der Sanitärarmatur ermöglicht. Gemäß der Erfindung wird diese Aufgabe durch eine Sanitärarmatur mit den Merkmalen des kennzeichnenden Teils des Patentanspruchs 1 gelöst.

Mit der Erfindung ist eine Sanitärarmatur bereitgestellt, bei der eine einfache, zerstörungsfreie Entnahme eines Rückflussverhinderers ermöglicht ist. Dadurch, dass an den Stopfen ein Haltegerüst angeordnet ist, das in die Kammer hineinragt und durch das der Rückflussverhinderer axial fixiert ist, ist die im Stand der Technik bekannte Verankerung von an dem Rückflussverhinderer angeformten Rastnasen in der Wand der Kammer nicht erforderlich. Der Rückflussverhinderer kann mit Hilfe des Haltegerüstes über den Stopfen in seine Position verbracht werden, wo er durch das Haltegerüst fixiert ist.

In Weiterbildung der Erfindung weist der wenigstens ein in eine Kammer eingebrachte Rückflussverhinderer wenigstens eine Dichtung auf, über die er gegenüber der Kammer abgedichtet ist, Über die Dichtung ist der Rückflussverhinderer passgenau in der Kammer über das Haltegerüst des Stopfens dichtend positionierbar.

Wenigstens ein Rückflussverhinderer weist einen beweglichen Kolben auf, über den dieser in Rückflussrichtung, das heißt in Richtung des Wasserzulaufs verschließbar ist, wobei in dem zugeordneten Stopfen der Kammer, in der der Rückflussverhinderer positioniert ist, ein Absperrelement zur Bewegung des Kolbens in seine Schließposition, das heißt, in der Position, in der er dichtend an dem Dichtsitz des Rückflussverhinderers anliegt und so den Wasserzufluss unterbindet, angeordnet ist. Hierdurch ist eine einfache Absperrung eines Zulaufkanals beispielsweise zum Austausch des Ventils der Sanitärarmatur ermöglicht. Durch das Absperrelement wird der Kolben gegen den in der Zulaufleitung bestehenden Wasserdruck in Schließposition verbracht und dort gehalten. Bevorzugt ist das Absperrelement durch eine in den Stopfen angeordnete Bohrung axial in Richtung des Kolbens bewegbar gelagert und zumindest in einer Position, in der er an dem Kolben in Schließposition anliegt, fixierbar.

In weiterer Ausgestaltung der Erfindung weist das Absperrelement bereichsweise ein Außengewinde auf, das in ein Innengewinde des Stopfens eingreift, wodurch das Absperrelement mittels Drehung axial in den Stopfen bewegbar ist. Hierdurch ist eine definierte Bewegung des Kolbens des Rückflussverhinderers über eine Ein- oder Ausschraubbewegung des Absperrelements, das so mit dem Kolben in Anlage bringbar ist, ermöglicht.

In Weiterbildung der Erfindung weist das Absperrelement einen vorzugsweise durchmesservergrößerten Kopf auf, der das Außengewinde aufweist, wobei in den Kopf ein Eingriff für ein Drehwerkzeug vorhanden ist. Hierdurch ist eine Bewegung des Absperrelements über einen Schraubendreher oder auch einen Inbusschlüssel ermöglicht. Durch das Vorsehen eines besonderen Eingriffs, wie beispielsweise eines Torx- oder Innenvielkant-Eingriffs ist einer Betätigung des Absperrelements durch unbefugte Personen entgegengewirkt.

In Ausgestaltung der Erfindung weist das Absperrelement einen zylindrischen Abschnitt auf, der an einer Dichtung, insbesondere einem O-Ring anliegt, durch die er geführt ist und über die er gegenüber dem Stopfen abgedichtet ist. Hierdurch ist eine kontinuierliche Führung und Abdichtung des Absperrelements gegenüber dem Stopfen auch während einer Axialbewegung erzielt.

In Weiterbildung der Erfindung weist der Stopfen ein Außengewinde auf, mit dem er in ein Innengewinde eines Vorraums eingeschraubt ist. Hierdurch ist eine zuverlässige Fixierung des Stopfens in der Armatur erzielt. Durch die Einschraubbewegung des Stopfens ist ein gleichmäßiger Vorschub des an diesem angeordneten Haltegerüsts und damit des an diesem anliegendem Rückflussverhinderers bewirkt. Bevorzugt ist das Haltegerüst des Stopfens hohlzylindrisch ausgebildet und weist wenigstens ein Fenster zum Durchtritt von Wasser auf.

In Ausgestaltung der Erfindung weist das Haltegerüst endseitig eine Aufnahme auf, über die der Rückflussverhinderer eingefasst ist. Hierdurch ist eine zuverlässige Fixierung des Rückflussverhinderers in der Kammer, in der er positioniert ist, gewährleistet. Bevorzugt ist die Aufnahme durch einen ringförmigen Absatz gebildet.

In weiterer Ausgestaltung der Erfindung ist der Rückflussverhinderer zumindest bereichsweise, vorzugsweise im Bereich seiner dem Stopfen zugewandten, oberen Hälfte, beabstandet zur Wand der Kammer angeordnet, wodurch zumindest bereichsweise, bevorzugt umlaufend ein Spalt gebildet ist, in den die Aufnahme des Haltegerüsts eingreift. Hierdurch ist eine axiale Fixierung des Rückflussverhinderers erzielt.

In einer bevorzugten Ausführung der Erfindung ist das Ventil ein Thermostatventil, wobei in den Ventilraum ein Kaltwasserzulauf und ein Warmwasserzulauf münden, die mit je einem Wasserzulaufkanal des Thermostatventils dichtend verbunden ist. Dabei ist vorzugsweise sowohl der Kaltwasserzulauf als auch der Warmwasserzulauf durch einen Vorraum geführt, in den ein Rückflussverhinderer eingebracht ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

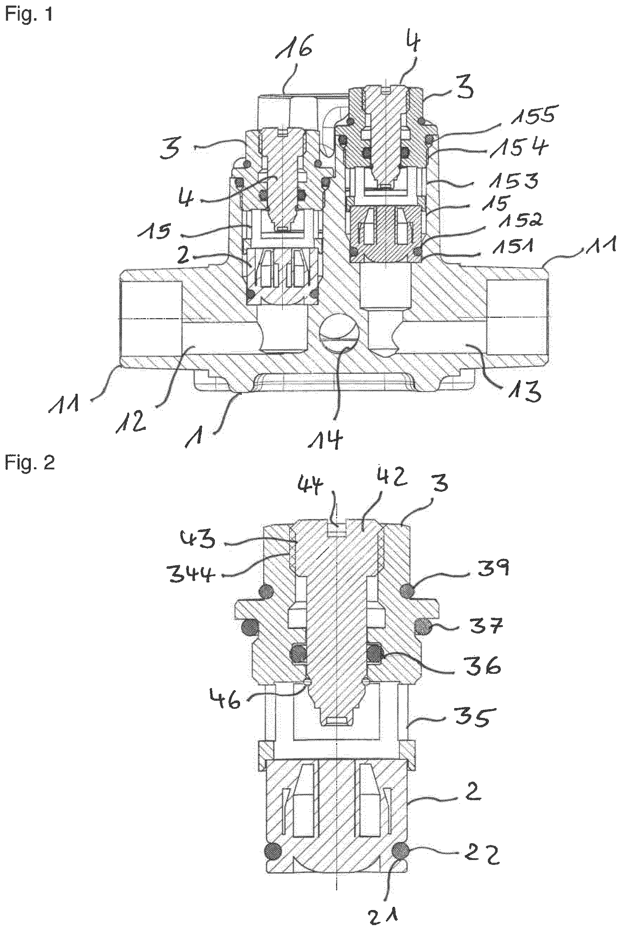

- Figur 1: die schematische Darstellung einer Thermostatmischarmatur;
- Figur 2: die schematische Darstellung eines Stopfens der Thermostatmischarmatur aus Figur 1 mit von diesem aufgenommenem Rückflussverhinderer;

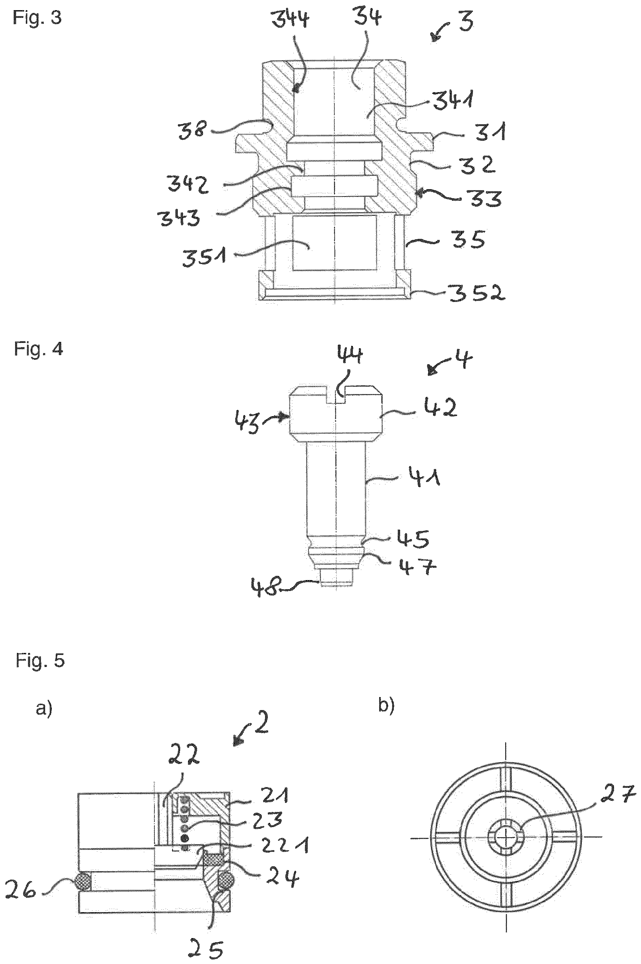

- Figur 3: die Detaildarstellung des Stopfens der Anordnung aus Figur 2 im Längsschnitt;
- Figur 4: die Detailansicht des Absperrelements der Anordnung aus Figur 2;
- Figur 5: die Darstellung des Rückflussverhinderers der Anordnung aus Figur 2 a) im Teilschnitt und b) in der Draufsicht.

Die als Ausführungsbeispiel gewählte Thermostatmischarmatur umfasst ein Gehäuse 1 mit einem Ventilsitz 16, der ein - nicht dargestelltes - Thermostatventil aufnimmt. An das Gehäuse 1 sind drei Anschlussstutzen 11 zum Anschluss von - nicht dargestellten - Wasserleitungen angeformt, durch die ein Warmwasserzulaufkanal 12, ein diesem gegenüberliegend angeordneter Kaltwasserzulaufkanal 13 sowie ein zwischen diesen verlaufender Ablaufkanal 14 geführt sind, die in dem Ventilsitz 16 münden. Dabei ist der Warmwasserzulaufkanal 12 und der Kaltwasserzulaufkanal 13 mit jeweils einem Zulauf des Thermostatventils und der Ablaufkanal 14 mit dem Ablauf des Thermostatventils verbunden.

Der Warmwasserzulaufkanal 12 und der Kaltwasserzulaufkanal 13 sind jeweils durch eine dem Ventilsitz 16 vorgelagerte Kammer 15 geführt, die jeweils einen Rückflussverhinderer 2 aufnimmt. Die Kammern 15 sind axial versetzt zueinander angeordnet und jeweils in Form einer Stufenbohrung ausgeführt, die in den jeweiligen Wasserzulaufkanal 12, 13 mündet. Im Übergang zu dem jeweiligen Wasserzulaufkanal 12, 13 ist ein Absatz 151 gebildet, an den sich ein erster zylindrischer Abschnitt 152 anschließt, der in einen zweiten, durchmessererweiterten Abschnitt 153 übergeht, der endseitig mit einem Innengewinde 154 versehen ist, das endseitig durch eine Fase 155 zur dichtenden Anlage eines O-Rings 37 begrenzt ist. Der erste zylindrische Abschnitt 152 erstreckt sich etwa bis zur halben Höhe des Rückflussverhinderers 2, der an dem Absatz 151 anliegt.

Der Rückflussverhinderer 2 umfasst in üblicher Weise ein zylindrisches Gehäuse 21, in dem ein endseitig mit einem Kegelstück 221 versehener Kolben 22 verschiebbar geführt ist, der über eine Druckfeder 23 gegen einen Dichtsitz 24 des Gehäuses 21 vorgespannt ist. Außen ist in das Gehäuse 21 eine Ringnut 25 zur Aufnahme eines O-Rings 26 eingebracht. Im Übrigen weist das Gehäuse 21 eine glatte Mantelfläche auf. Rastnasen oder sonstige Mittel zur formschlüssigen Verbindung mit der Wand der Kammer 15 sind nicht vorhanden.

Der Stopfen 3 ist im Wesentlichen zylinderförmig ausgebildet und weist etwa mittig außen einen ringförmigen Kragen 31 auf, der eine umlaufende Nut 32 begrenzt, die in ein Außengewinde 33 übergeht. Zentrisch ist in den Stopfen 3 axial eine Stufenbohrung 34 eingebracht. Die Stufenbohrung 34 weist einen ersten Abschnitt 341 auf, der an seinem dem Außengewinde 33 abgewandten Ende mit einem Innengewinde 344 versehen ist und an den sich ein durchmesserverminderter zweiter Abschnitt 342 anschließt, der mittig mit einer Ringnut 343 zur Aufnahme eines O-Rings 36 versehen ist. Der zweite Abschnitt 342 erstreckt sich etwa über den mit dem Außengewinde 33 versehenen Bereich des Stopfens 3. Auf seiner der umlaufenden Nut 32 gegenüberliegenden Seite ist der Kragen 31 durch eine Ringnut 38 zur Aufnahme eines O-Rings 39 begrenzt.

An den Stopfen 3 ist ein im Wesentlichen hohlzylindrisches Haltegerüst 35 angeformt, das mit zwei gegenüberliegend angeordneten Fenstern 351 zum Durchtritt von Wasser versehen ist. Endseitig ist an das Haltegerüst 35 ein ringförmiger Absatz 352 angeformt, durch den eine Aufnahme für den Rückflussverhinderer 2 gebildet ist.

Das Absperrelement 4 umfasst einen Zylinderkörper 41, an den endseitig ein durchmessererweiterter, zylinderförmiger Kopf 42 angeformt ist, der mit einem Außengewinde 43 versehen ist. In den Kopf 42 ist ein kreuzschlitzförmiger Werkzeugeingriff 44 eingebracht. An seinem dem Kopf 42 gegenüberliegenden Ende ist an den Zylinderkörper 41 eine Kehlnut 45 zur Aufnahme eines O-Rings 46 eingebracht, an die sich ein kegelstupfförmiger Abschnitt 47 anschließt, an den ein zylindrischer Stutzen 48 angeformt ist.

In die beiden Kammern 15 des Gehäuses 1 ist jeweils ein Rückflussverhinderer 2 eingebracht, derart, dass sie an dem Absatz 151 der Kammer 15 anliegen, wobei dessen Kolben 22 in Richtung des jeweiligen Wasserzulaufkanals 12, 13 gegen den Dichtsitz 24 vorgespannt ist. Die beiden Kammern 15 sind jeweils über einen Stopfen 3 verschlossen, der mit seinem Außengewinde 33 in das Innengewinde 154 der Kammer 15 eingeschraubt ist, wobei der O-Ring 37 an der Fase 155 der Kammer 15 dichtend anliegt. Dabei liegt das Haltegerüst 35 der eines jeden Stopfens 3 auf dem Gehäuse 21 des jeweiligen Rückflussverhinderers 2 auf, das von dem ringförmige Absatz 352 eingefasst ist, der in den zwischen dem Rückflussverhinderer 2 und der Wand des ersten zylindrischen Abschnitts 151 der jeweiligen Kammer 15 gebildeten Spalt eingreift. Der Rückflussverhinderer 2 ist so zwischen dem Absatz 151 der Kammer 15 und dem Haltegerüst 35 des Stopfens 3 sicher gehalten. Zum Austausch des Rückflussverhinderers 2 ist lediglich der Stopfen 3 zu entfernen; anschließend kann dieser einfach entnommen und durch einen neuen Rückflussverhinderer 2 ersetzt werden.

In die Stufenbohrung 34 des Stopfens 3 ist das Absperrelement 4 eingebracht, wobei der Kopf 42 mit seinem Außengewinde 43 in das Innengewinde 344 der Stufenbohrung 34 eingeschraubt ist. Dabei ist der Zylinderkörper 41 in dem mit dem O-Ring 36 versehenen zweiten Abschnitt 342 dichtend geführt, wobei der in der Kehlnut 45 angeordnete O-Ring 46 an dem Stopfen 3 anliegt. Durch Drehung des Absperrelements 4 über einen in den Werkzeugeingriff 44 des Kopfes 42 eingreifenden Kreutzschlitzschraubendreher im Uhrzeigersinn wird das Absperrelement 4 in Richtung des Rückflussverhinderers 2 bewegt, bis der Stutzen 47 in einen hierzu in dem Kolben 22 vorgesehenen Eingriff 27 eingreift. Durch weitere Drehung des Absperrelements 4 kann der Kolben 22 mit seinem Kegelstück 221 gegen den Dichtsitz 24 bewegt werden, wodurch der entsprechende Wasserzulaufkanal 12, 13 dichtend verschlossen wird. Über den Gewindeeingriff des Absperrelements 4 kann dieses darüber hinaus verwendet werden, um die Menge des jeweiligen Wasserstroms in den Warmwasserzulaufkanal 12 bzw. dem Kaltwasserzulaufkanal 13 zu begrenzen, indem der Kolben 22 mit seinem Kegelstück 221 nicht vollständig auf den Dichtsitz 24 aufgesetzt wird.

## Patentansprüche

1. Sanitärarmatur, insbesondere Thermostatmischarmatur, mit einem Gehäuse (1), das einen Ventilsitz (16) zur Aufnahme eines Ventils aufweist und in den wenigstens ein Zulaufkanal (12, 13) und ein Ablaufkanal (14) münden, wobei der Ventilaufnahme vorgeschaltet jedem Zulaufkanal (12, 13) eine Kammer (15) zur Aufnahme eines Rückflussverhinderers (2) zugeordnet ist, durch die der Zulaufkanal geführt ist und in die ein Rückflussverhinderer (2) eingebracht ist und die über einen Stopfen (3) verschlossen ist, wobei an dem Stopfen (3) ein Haltegerüst angeordnet ist, das in die Kammer (15) hineinragt und durch das der Rückflussverhinderer (2) axial fixiert ist, **dadurch gekennzeichnet, dass** der wenigstens eine Rückflussverhinderer (2) einen beweglichen Kolben (22) aufweist, über den er in Rückflussrichtung verschließbar ist, wobei in dem zugeordneten Stopfen (3) ein Absperrelement (4) zur Bewegung des Kolbens (22) des Rückflussverhinderers (2) in seine Schließposition angeordnet ist.

2. Sanitärarmatur nach Anspruch 1, **dadurch gekennzeichnet, dass** der wenigstens eine in eine Kammer (15) eingebrachte Rückflussverhinderer (2) wenigstens eine Dichtung (5) aufweist, über die er gegenüber der Kammer (15) abgedichtet ist.

3. Sanitärarmatur nach Anspruch 2, **dadurch gekennzeichnet, dass** das Absperrelement (4) durch eine in dem Stopfen (3) angeordnete Bohrung (34) axial in Richtung des Kolbens (22) des Rückflussverhinderers (2) bewegbar gelagert und zumindest in einer Position, in der er an dem Kolben (22) in seiner Schließposition anliegt, fixierbar ist.

4. Sanitärarmatur nach Anspruch 3, **dadurch gekennzeichnet, dass** das Absperrelement (4) bereichsweise ein Außengewinde (43) aufweist, das in ein Innengewinde (344) des Stopfens (3) eingreift, wodurch das Absperrelement (4) mittels Drehung axial in dem Stopfen (3) bewegbar ist.

5. Sanitärarmatur nach Anspruch 4, **dadurch gekennzeichnet, dass** das Absperrelement (4) einen vorzugsweise durchmesservergrößerten Kopf (42) aufweist, der das Außengewinde (43) aufweist, wobei in dem Kopf (42) ein Eingriff (44) für ein Drehwerkzeug vorhanden ist.

6. Sanitärarmatur nach einem der Ansprüche 1 sowie 3 bis 5, **dadurch gekennzeichnet, dass** das Absperrelement (4) einen zylindrischen Abschnitt (41) aufweist, der an einer Dichtung (37) anliegt, durch die er geführt ist und über die er gegenüber dem Stopfen (3) abgedichtet ist.

7. Sanitärarmatur nach einem der vorgenannten Ansprüche, **dadurch gekennzeichnet, dass** der Stopfen (3) ein Außengewinde (33) aufweist, mit dem er in ein Innengewinde (154) einer Kammer (15) eingeschraubt ist.

8. Sanitärarmatur nach einem der vorgenannten Ansprüche, **dadurch gekennzeichnet, dass** das Haltegerüst (35) des Stopfens (3) hohlzylindrisch ausgebildet ist und wenigstens ein Fenster (351) zum Durchtritt von Wasser aufweist.

9. Sanitärarmatur nach Anspruch 8, **dadurch gekennzeichnet, dass** das Haltegerüst (35) endseitig eine Aufnahme aufweist, über die der Rückflussverhinderer (2) eingefasst ist.

10. Sanitärarmatur nach Anspruch 9, **dadurch gekennzeichnet, dass** die Aufnahme durch einen ringförmigen Absatz (352) gebildet ist.

11. Sanitärarmatur nach Anspruch 8 oder 10, **dadurch gekennzeichnet, dass** der Rückflussverhinderer (2) zumindest bereichsweise, vorzugsweise im Bereich seiner dem Stopfen (3) zugewandten, oberen Hälfte, beabstandet zur Wand der Kammer (15) angeordnet ist, wodurch zumindest bereichsweise, bevorzugt umlaufend ein Spalt gebildet ist, in den die Aufnahme des Haltegerüsts (35) eingreift.

12. Sanitärarmatur nach einem der vorgenannten Ansprüche, **dadurch gekennzeichnet, dass** das in den Ventilsitz (16) ein Thermostatventil eingebracht ist, wobei in den Ventilsitz (16) ein Warmwasserzulauf (12) und ein Kaltwasserzulauf (13) münden, die mit je einem Wasserzulaufkanal des Thermostatventils dichtend verbunden sind.

## Claims

1. Sanitary fitting, in particular thermostatic mixing valve, having a housing (1), which has a valve seat (16) for receiving a valve and into which open at least one inlet channel (12, 13) and one outlet channel (14), wherein upstream of the valve receptacle a chamber (15) for receiving a backflow preventer (2) is associated with each inlet channel (12, 13), through which chamber (15) the inlet channel is guided and into which chamber (15) a backflow preventer (2) is introduced and which chamber (15) is closed by means of a plug (3), wherein a retaining frame is arranged on the plug (3), which retaining frame projects into the chamber (15) and by means of which the backflow preventer (2) is axially fixed, **characterised in that** the at least one backflow preventer (2) has a movable piston (22), by means of which it can be closed in the direction of return flow, wherein a shut-off element (4) for moving the piston (22) of the backflow preventer (2) into its closed position is arranged in the associated plug (3).

2. Sanitary fitting according to claim 1, **characterised in that** the at least one backflow preventer (2) introduced in a chamber (15) has at least one seal (5), via which it is sealed with respect to the chamber (15).

3. Sanitary fitting according to claim 2, **characterised in that** the shut-off element (4) is mounted so as to be movable axially in the direction of the piston (22) of the backflow preventer (2) through a bore (34) arranged in the plug (3) and is fixable at least in a position in which it rests against the piston (22) in its closed position.

4. Sanitary fitting according to claim 3, **characterised in that** the shut-off element (4) has an external thread (43) in certain areas, which engages in an internal thread (344) of the plug (3), whereby the shut-off element (4) is axially movable in the plug (3) by means of rotation.

5. Sanitary fitting according to claim 4, **characterised in that** the shut-off element (4) has a preferably diameter-enlarged head (42), which has the external thread (43), wherein an engagement (44) for a turning tool is provided in the head (42).

6. Sanitary fitting according to one of claims 1 and 3 to 5, **characterised in that** the shut-off element (4) has a cylindrical section (41), which rests against a seal (37), through which it is guided and via which it is sealed with respect to the plug (3).

7. Sanitary fitting according to one of the previous claims, **characterised in that** the plug (3) has an external thread (33), with which it is screwed into an internal thread (154) of a chamber (15).

8. Sanitary fitting according to one of the previous claims, **characterised in that** the retaining frame (35) of the plug (3) is hollow-cylindrical and has at least one window (351) for the passage of water.

9. Sanitary fitting according to claim 8, **characterised in that** the retaining frame (35) has a receptacle at the end, via which the backflow preventer (2) is enclosed.

10. Sanitary fitting according to claim 9, **characterised in that** the receptacle is formed by an annular shoulder (352).

11. Sanitary fitting according to claim 8 or 10, **characterised in that** the backflow preventer (2) is, at least in some areas, preferably in the region of its upper half facing the plug (3), arranged at a distance from the wall of the chamber (15), whereby a gap is formed at least in some areas, preferably circumferentially, in which the receptacle of the retaining frame (35) engages.

12. Sanitary fitting according to one of the previous claims, **characterised in that** a thermostatic valve is inserted in the valve seat (16), wherein a hot water inlet (12) and a cold water inlet (13) open into the valve seat (16), which are each sealingly connected to a water inlet channel of the thermostatic valve.

## Revendications

1. Robinetterie sanitaire, en particulier mitigeur à thermostat, comprenant un boîtier (1) présentant un siège (16) destiné à recevoir une vanne et dans lequel aboutissent au moins un conduit d'amenée (12, 13) et un conduit d'écoulement (14), sachant qu'à chaque conduit d'amenée (12, 13) est affectée - en amont du logement de vanne - une chambre (15) servant à recevoir un dispositif antiretour (2), chambre à travers laquelle est guidé le conduit d'amenée et dans laquelle est introduit un dispositif antiretour (2), et qui est obturée via un bouchon (3), sachant que contre le bouchon (3) est disposée une structure de retenue faisant saillie dans la chambre (15) et grâce à laquelle structure le dispositif antiretour (2) est immobilisé axialement, **caractérisée en ce qu'**au moins le dispositif antiretour (2) présente un piston mobile (22) via lequel il est obturable dans le sens du reflux, sachant que dans le bouchon (3) affecté est disposé un élément de fermeture (4) pour amener le piston (22) du dispositif antiretour (2) sur sa position de fermeture.

2. Robinetterie sanitaire selon la revendication 1, **caractérisée en ce qu'**au moins le dispositif antiretour (2) intégré dans une chambre (15) présente au moins un joint (5) via lequel il est étanché par rapport à la chambre (15).

3. Robinetterie sanitaire selon la revendication 2, **caractérisée en ce que** l'élément de fermeture (4) est en appui mobile axialement à travers un alésage (34) disposé dans le bouchon (3) en direction du piston (22) du dispositif antiretour (2), et qu'il est immobilisable au moins dans une position, celle dans laquelle il applique contre le piston (22) dans sa position de fermeture.

4. Robinetterie sanitaire selon la revendication 3, **caractérisée en ce que** l'élément de fermeture (4) présente localement un filetage extérieur (43) qui attaque un filetage intérieur (344) du bouchon (3), faisant que l'élément de fermeture (4) est déplaçable axialement, par rotation, à l'intérieur du bouchon (3).

5. Robinetterie sanitaire selon la revendication 4, **caractérisée en ce que** l'élément de fermeture (4) présente une tête (42) de préférence d'un diamètre accru, tête qui présente le filetage extérieur (43), sachant que dans la tête (42) est présente une géométrie d'attaque (44) pour un outil tournant.

6. Robinetterie sanitaire selon l'une des revendications 1 et 3 à 5, **caractérisée en ce que** l'élément de fermeture (4) présente un segment cylindrique (41) qui applique contre un joint (37) à travers lequel il est guidé, et via lequel il est étanché par rapport au bouchon (3).

7. Robinetterie sanitaire selon l'une des revendications précédentes, **caractérisée en ce que** le bouchon (3) présente un filetage extérieur (33) par lequel il est vissé dans un filetage intérieur (154) d'une chambre (15).

8. Robinetterie sanitaire selon l'une des revendications précédentes, **caractérisée en ce que** la structure de retenue (35) du bouchon (3) est configurée cylindrique creuse et qu'elle comporte au moins une lumière (351) pour laisser passer l'eau.

9. Robinetterie sanitaire selon la revendication 8, **caractérisée en ce que** la structure de retenue (35) présente à une extrémité un logement servant de monture au dispositif antiretour (2).

10. Robinetterie sanitaire selon la revendication 9, **caractérisée en ce que** le logement est formé par un épaulement (352) de forme annulaire.

11. Robinetterie sanitaire selon la revendication 8 ou 10, **caractérisée en ce que** le dispositif antiretour (2) est disposé au moins localement, de préférence dans la zone de sa moitié supérieure regardant le bouchon (3), à distance de la paroi de la chambre (15), faisant qu'au moins localement, de préférence périphériquement, est formé un interstice dans lequel attaque le logement de la structure de retenue (35).

12. Robinetterie sanitaire selon l'une des revendications précédentes, **caractérisée en ce que** dans le siège (16) de vanne est intégrée une vanne thermostatique, sachant que dans le siège (16) de vanne aboutissent une arrivée d'eau chaude (12) et une arrivée d'eau froide (13) qui chacune sont reliées de façon étanche à un conduit d'arrivée d'eau de la vanne thermostatique.
